# EUROPÄISCHE PATENTANMELDUNG

(11) **EP 3 518 051 A1**
(43) Veröffentlichungstag der Anmeldung: **31.07.2019**
(21) Anmeldenummer: 18153679.8
(22) Anmeldetag: 26.01.2018
(51) Int. Cl.: G05B 13/02, G05B 19/042, G05B 19/4093

(54) **ERMITTLUNG EINER STRATEGIE ZUR OPTIMIERUNG DES BETRIEBS EINER BEARBEITUNGSMASCHINE**

(71) Anmelder: Siemens Aktiengesellschaft, 80333 München (DE)
(72) Erfinder: Hamm, Carsten, 91330 Eggolsheim (DE); Kubik, Alexander, 91058 Erlangen (DE); Schäfers, Elmar, 90763 Fürth (DE)

(57) **Zusammenfassung**

Eine Bewegungssteuerung (5) einer Bearbeitungsmaschine ermittelt unter Verwendung von Parametern (P4) Folgen von Lagesollwerten (x*) und gibt je eine der Folgen von Lagesollwerten (x*) einer jeweiligen Antriebssteuerung (4) vor, welche unter Verwendung von Parametern (P1 bis P3) Ansteuersignale (S) für eine von einem jeweiligen Antrieb (2) angetriebene Mechanik (3) einer jeweiligen lagegeregelten Achse (1) ermitteln und an den jeweiligen Antrieb (2) ausgeben. Zur Optimierung des Betriebs der Bearbeitungsmaschine nimmt eine Recheneinrichtung (13) über eine Benutzerschnittstelle (16) von einem Benutzer (17) Eigenschaften (E) eines mittels der Bearbeitungsmaschine zu bearbeitenden Werkstücks (7), eine Beschreibung der Art (A) der vorzunehmenden Bearbeitung, eine Beschreibung (L) der Leistungsfähigkeit der Bearbeitungsmaschine und ein Optimierungsziel (Z) entgegen. Die Recheneinrichtung (13) ermittelt anhand der entgegengenommenen Daten (E, A, L, Z) unter Verwendung interner Ermittlungsregeln (R), welche Parameter (P1 bis P4) zur Optimierung des Betriebs variiert werden sollen, mit welchen Messgrößen (M) die Bearbeitungsmaschine oder einzelne Achsen (1) im Rahmen von Messungen betrieben werden sollen, um sinnvoll auswertbare Messergebnisse zu erhalten, und welche Kriterien (K) zur Bewertung der anhand der Messungen ermittelten Messergebnisse verwendet werden können. Das Ergebnis ihrer Ermittlung gibt die Recheneinrichtung (13) an den Benutzer (17) aus.

## Beschreibung

Die vorliegende Erfindung geht aus von einem Ermittlungsverfahren für eine Strategie zur Optimierung des Betriebs einer Bearbeitungsmaschine, wobei eine Bewegungssteuerung der Bearbeitungsmaschine unter Verwendung von Parametern Folgen von Lagesollwerten ermittelt und je eine der Folgen von Lagesollwerten einer jeweiligen Antriebssteuerung vorgibt, wobei die Antriebssteuerungen unter Verwendung von Parametern Ansteuersignale für eine von einem jeweiligen Antrieb angetriebene Mechanik einer jeweiligen lagegeregelten Achse ermitteln und die Ansteuersignale an den jeweiligen Antrieb ausgeben.

Die vorliegende Erfindung geht weiterhin aus von einem Computerprogramm, das Maschinencode umfasst, der von einer Recheneinrichtung abarbeitbar ist, wobei die Abarbeitung des Maschinencodes durch die Recheneinrichtung bewirkt, dass die Recheneinrichtung ein derartiges Ermittlungsverfahren ausführt.

Die vorliegende Erfindung geht weiterhin aus von einer Recheneinrichtung, die mit einem derartigen Computerprogramm programmiert ist, so dass die Recheneinrichtung ein derartiges Ermittlungsverfahren ausführt.

Im Rahmen der Inbetriebnahme einer Bearbeitungsmaschine und auch bei Änderungen von mechanischen Komponenten der Bearbeitungsmaschine müssen oftmals Regler- und Steuerungsparameter angepasst werden. Gleiches gilt, wenn die Bearbeitungsmaschine als solche zwar unverändert bleibt, aber eine andere Aufgabe ausführen soll. Dies gilt ganz besonders bei Werkzeugmaschinen, bei denen in der Regel durch die Bearbeitung, die mit einer Bewegung von mindestens einer lagegeregelten Achse - oftmals von mehreren lagegeregelten Achsen - verbunden ist, ein Werkstück in eine bestimmte Kontur gebracht werden soll. Derartige Konturen können beispielsweise die dreidimensionale Oberfläche des Werkstücks bilden. Die Qualität einer Kontur kann beispielsweise durch Positionstoleranzen und eine Oberflächengüte - letztere beispielsweise definiert durch die Rauigkeit oder die Gleichmäßigkeit einer Fläche - beschrieben werden.

Ein weiteres Ziel beim Betrieb einer Bearbeitungsmaschine ist regelmäßig die Maximierung des Durchsatzes, d.h. die Minimierung der zur Bearbeitung eines einzelnen Werkstücks erforderlichen Zeit.

Aus den zu erfüllenden technologischen Anforderungen ergeben sich regeltechnische Anforderungen an die beteiligten Achsen der Bearbeitungsmaschine. Die Achsen bestehen ihrerseits aus einem Stellglied - in der Regel einem elektrischen Antrieb - und einer mittels des Stellgliedes bewegten Mechanik. Die mechanischen Eigenschaften sind beispielsweise durch das Material des Werkstücks sowie die Geometrie und die Schmierung der Komponenten der Achse festgelegt.

Die Eigenschaften der Achsen und der zugehörigen Antriebe können innerhalb gewisser Grenzen durch Parameter der den Achsen zugeordneten Regler eingestellt werden. Beispiele derartiger Parameter sind eine Linearverstärkung und eine Nachstellzeit. Auch eine übergeordnete Bewegungssteuerung, welche den Achsen ihre Sollwerte vorgibt, ist oftmals parametrierbar Durch die Parametrierung der Regler und der Bewegungssteuerung wird das Gesamtverhalten der Bearbeitungsmaschine eingestellt.

Bei einer üblichen lagegeregelten Achse mit einem elektrischen Antrieb enthält die Antriebsregelung mindestens zwei Regelkreise, nämlich einen Lageregelkreis und einen dem Lageregelkreis unterlagerten Drehzahlregelkreis. Oftmals ist dem Drehzahlregelkreis zusätzlich noch ein Stromregelkreis unterlagert. Alle diese Regelkreise umfassen einen jeweiligen Regler (Lageregler, Drehzahlregler bzw. Stromregler), dessen Parameter an die Mechanik der geregelten Achse und an die Anforderungen des Betriebs angepasst werden müssen. Auch die Vorgabe der Lagesollwerte kann durch Parameter in der Steuerung beeinflusst werden.

All diese Parameter müssen unter Berücksichtigung der von der Bearbeitungsmaschine vorzunehmenden Bearbeitung und der dynamischen Eigenschaften der lagegeregelten Achsen bestimmt werden. Gegebenenfalls kann es auch erforderlich sein, weitere Abhängigkeiten zu berücksichtigen.

Die dynamischen Eigenschaften der lagegeregelten Achsen sind zunächst nicht bekannt. Insbesondere enthält der Antriebsstrang der jeweiligen lagegeregelten Achse außer dem elektrischen Antrieb als solchen mechanische Elemente, welche die Bewegung und das Drehmoment des Stellgliedes auf eine lastseitige mechanische Komponente übertragen. Statische oder dynamische Größen wie beispielsweise die Masse oder das Trägheitsmoment, die Steifigkeit, die Dämpfung, die Trägheitsverteilung und die Steifigkeitsverteilung und auch eine Reibungsverteilung beeinflussen die Zeit und/oder die Qualität, mit der eine bestimmte Kontur von den beteiligten Achsen abgefahren werden kann.

Im Stand der Technik ist es erforderlich, zunächst die Achsen herauszufinden, die für eine bestimmte auszuführende Bearbeitung - beispielsweise das Abfahren einer bestimmten Bahn - relevant sind. Weiterhin muss erkannt werden, welche Eigenschaften der Achsen für die Erreichung der gewünschten Bearbeitung des Werkstücks durch die Bearbeitungsmaschine von Bedeutung sind und was der aktuelle Zustand dieser Eigenschaften ist. Weiterhin muss erkannt werden, wie diese Eigenschaften durch die einstellbaren Parameter verändert werden und welche Folgen eine derartige Änderung der einstellbaren Parameter hat. Sodann müssen konkrete Werte für die einstellbaren Parameter bestimmt werden. Hierfür muss unter anderem auch bekannt sein, wo die physikalischen Grenzen liegen, die auch bei einer optimalen Einstellung der Parameter nicht überschritten werden können. Weiterhin müssen Prüfmethoden gefunden werden, mittels derer der Erfolg einer gewählten Parametrisierung bewertet werden kann. Schließlich muss überlegt werden, was weiterhin getan werden kann, sofern sich ein weiterer Optimierungsbedarf ergibt.

Im Stand der Technik erfolgt die Inbetriebnahme von Bearbeitungsmaschinen durch spezialisierte Techniker, welche oftmals über ein Expertenwissen verfügen müssen. Die Techniker müssen insbesondere Methoden für die Bewertung der mechanischen Eigenschaften der lagegeregelten Achsen und der aktuellen Parametrierung auffinden. Nur dadurch sind sie in der Lage, den aktuellen Zustand der Bearbeitungsmaschine und insbesondere der Parameter zu bewerten und geeignete Maßnahmen zur zielgerichteten Optimierung des Betriebs der Bearbeitungsmaschine zu ergreifen. Auch versierte Techniker müssen die Parameter jedoch oftmals iterativ verändern, bis bestimmte gewünschte Eigenschaften der Bearbeitungsmaschine erreicht werden. Die Kontrolle einer einmal erfolgten Optimierung geschieht sodann durch einen Fertigen eines realen Werkstücks (oder mehrerer Werkstücke) und einer hierauf aufbauenden Bewertung. Alternativ oder zusätzlich können vorbestimmte Konturen wie beispielsweise Kreise gefertigt und mit internen oder externen Meßsystemen der Bearbeitungsmaschine vermessen werden. Gegebenenfalls müssen diese Vorgehensweisen iterativ mehrmals wiederholt werden, bis eine hinreichend gute Parametrisierung der Bearbeitungsmaschine erreicht ist. Im Ergebnis ergibt sich dadurch ein zeitaufwendiger und kostenintensiver Prozess, innerhalb dessen viele einzelne Entscheidungen getroffen werden müssen. Je geringer das Expertenwissen ist, desto länger dauert das Einrichten der Bearbeitungsmaschine und desto unsicherer ist das Erreichen des gewünschten Ziels. Letzteres liegt insbesondere daran, dass nicht immer klar ist, an welchen Stellen Grenzen der Optimierung erreicht sind, an welchen Stellen noch Optimierungsbedarf besteht und an welchen Stellen noch optimiert werden kann.

Die Aufgabe der vorliegenden Erfindung besteht darin, Möglichkeiten zu schaffen, mittels derer auf einfache, kostengünstige und zuverlässige Weise eine zielgerichtete Optimierung einer Bearbeitungsmaschine erreicht werden kann.

Die Aufgabe wird durch ein Ermittlungsverfahren mit den Merkmalen des Anspruchs 1 gelöst. Vorteilhafte Ausgestaltungen des Ermittlungsverfahrens sind Gegenstand der abhängigen Ansprüche 2 bis 9.

Erfindungsgemäß wird ein Ermittlungsverfahren der eingangs genannten Art geschaffen, bei dem eine Recheneinrichtung
- über eine Benutzerschnittstelle von einem Benutzer Eigenschaften eines mittels der Bearbeitungsmaschine zu bearbeitenden Werkstücks, eine Beschreibung der Art der vorzunehmenden Bearbeitung, eine Beschreibung der Leistungsfähigkeit der Bearbeitungsmaschine und ein Optimierungsziel entgegennimmt und
- anhand der entgegengenommenen Daten unter Verwendung interner Ermittlungsregeln ermittelt, welche Parameter der Bearbeitungsmaschine zur Optimierung des Betriebs variiert werden sollen,
   -- welche Parameter zur Optimierung des Betriebs variiert werden sollen,
   -- mit welchen Messgrößen die Bearbeitungsmaschine oder einzelne Achsen im Rahmen von Messungen betrieben werden sollen, um sinnvoll auswertbare Messergebnisse zu erhalten, und
   -- welche Kriterien zur Bewertung der anhand der Messungen ermittelten Messergebnisse verwendet werden können,
und die ermittelten Parameter, Messgrößen und Kriterien an den Benutzer ausgibt.

Die Eigenschaften des Werkstücks können beispielsweise dessen Oberflächenqualität umfassen. Die Oberflächenqualität kann beispielsweise in Form einer Konturgenauigkeit gegeben sein. Alternativ oder zusätzlich zur Oberflächenqualität können die Eigenschaften des Werkstücks dessen Masse, dessen Volumen, dessen Material und/oder dessen Abmessungen umfassen.

Die Beschreibung der Art der vorzunehmenden Bearbeitung kann beispielsweise spezifizieren, ob eine Fräsbearbeitung, eine Drehbearbeitung oder eine Laserbearbeitung erfolgt. Bei einer Fräsbearbeitung kann weiterhin spezifiziert werden, ob sie dreiachsig, vierachsig oder fünfachsig erfolgt. Eine Laserbearbeitung ist in der Regel zweiachsig. Die Beschreibung der Leistungsfähigkeit der Bearbeitungsmaschine kann beispielsweise die maximal mögliche Beschleunigung und die maximal mögliche Geschwindigkeit von Achsen der Bearbeitungsmaschine umfassen.

Das Optimierungsziel kann beispielsweise spezifizieren, in welchem Umfang im Rahmen der Optimierung die Konturgenauigkeit des Werkstücks und die zum Erreichen der Konturgenauigkeit des Werkstücks erforderliche Bearbeitungszeit berücksichtigt werden sollen. Beispielsweise kann eine Bearbeitungszeit fest vorgegeben werden und die zugehörige Parametrisierung ermittelt werden, mit der ohne Überschreitung der Bearbeitungszeit die Kontur bestmöglich eingehalten wird. Auch kann umgekehrt eine Konturgenauigkeit des Werkstücks fest vorgegeben werden und die zugehörige Parametrisierung ermittelt werden, mit der unter Einhaltung der Kontogenauigkeit die Bearbeitungszeit minimiert wird.

Durch das erfindungsgemäße Ermittlungsverfahren wird also nicht die Optimierung als solche durchgeführt. Es werden also nicht die optimierten Parameter als solche ermittelt. Die Ermittlung des jeweiligen optimalen Wertes für den jeweiligen Parameter obliegt vielmehr nach wie vor dem Benutzer selbst. Dem Benutzer werden jedoch die Informationen an die Hand gegeben, welche Parameter zur Optimierung des Betriebs der Bearbeitungsmaschine überhaupt variiert werden müssen und worauf der Benutzer im Rahmen der Optimierung achten muss.

Um die zu variierenden Parameter auf effiziente Weise bestimmen zu können, umfassen die Ermittlungsregeln für die Parameter vorzugsweise eine Bewertung von deren jeweiligen Beiträgen zu möglichen Optimierungszielen. Im einfachsten Fall kann die Bewertung drei verschiedene Werte aufweisen, beispielsweise die Werte -1, 0 und +1 für einen negativen, einen neutralen und einen positiven Beitrag. Alternativ ist auch eine feinere Abstufung möglich, beispielsweise in ganzen Zahlen auf einer Skala von -5 bis +5 oder von -10 bis +10.

Vorzugsweise umfassen die Ermittlungsregeln weiterhin Abhängigkeiten und Kopplungen der Achsen und deren Parameter und deren Auswirkungen auf mögliche Optimierungsziele. Dadurch können insbesondere sich gegenseitig störende Parametrierungen berücksichtigt werden.

Vorzugsweise ermittelt die Recheneinrichtung zusätzlich zu den zu variierenden Parametern als solchen auch eine Kopplung der zu variierenden Parameter und/oder eine Reihenfolge, in welcher die zu variierenden Parameter variiert werden sollen. Die Kopplung und/oder die Reihenfolge gibt die Recheneinrichtung ebenfalls an den Benutzer aus. Dadurch wird für den Benutzer eine einfache und effiziente Optimierung ermöglicht.

Oftmals umfassen die Parameter Basisparameter und Zusatzparameter. Die Basisparameter können beispielsweise Parameter sein, welche standardmäßig zur Verfügung stehen, während die Zusatzparameter Bestandteil von Erweiterungspaketen sind, die separat lizenziert werden und damit zusätzlich Geld kosten. In diesem Fall prüft die Recheneinrichtung vorzugsweise, ob zusätzlich zu den Basisparametern auch mindestens einer der Zusatzparameter variiert werden soll oder muss, und gibt das Ergebnis der Prüfung an den Benutzer aus. Dadurch ist für den Benutzer ersichtlich, ob er beispielsweise ein Erweiterungspaket benötigt oder ob ein derartiges Erweiterungspaket überhaupt Vorteile bietet. Der Benutzer kann dann entscheiden, ob er das weitere Paket nutzen will oder nicht.

Vorzugsweise nimmt die Recheneinrichtung vom Benutzer zusätzlich entgegen, ob mittels der Bearbeitungsmaschine ein einzelnes Werkstück oder eine Serie von Werkstücken bearbeitet werden soll, und berücksichtigt diese Information bei der Ermittlung der zu variierenden Parameter. Insbesondere ist eine Optimierung der erforderlichen Bearbeitungszeit umso bedeutender, je größer eine Serie von zu bearbeitenden Werkstücken ist, während die erforderliche Bearbeitungszeit bei einer Einzelfertigung oftmals von untergeordneter Bedeutung ist.

Die Aufgabe wird weiterhin durch ein Computerprogramm mit den Merkmalen des Anspruchs 10 gelöst. Erfindungsgemäß bewirkt die Abarbeitung des Maschinencodes durch die Recheneinrichtung, dass die Recheneinrichtung ein erfindungsgemäßes Ermittlungsverfahren ausführt.

Die Aufgabe wird weiterhin durch eine Recheneinrichtung mit den Merkmalen des Anspruchs 11 gelöst. Erfindungsgemäß ist die Recheneinrichtung mit einem erfindungsgemäßen Computerprogramm programmiert, so dass die Recheneinrichtung ein erfindungsgemäßes Ermittlungsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Bearbeitungsmaschine,
- FIG 2: eine Antriebssteuerung,
- FIG 3: eine Recheneinrichtung,
- FIG 4: ein Ablaufdiagramm,
- FIG 5: mehrere Ermittlungsregeln,
- FIG 6: ein Ablaufdiagramm,
- FIG 7: ein Ablaufdiagramm und
- FIG 8: ein Ablaufdiagramm.

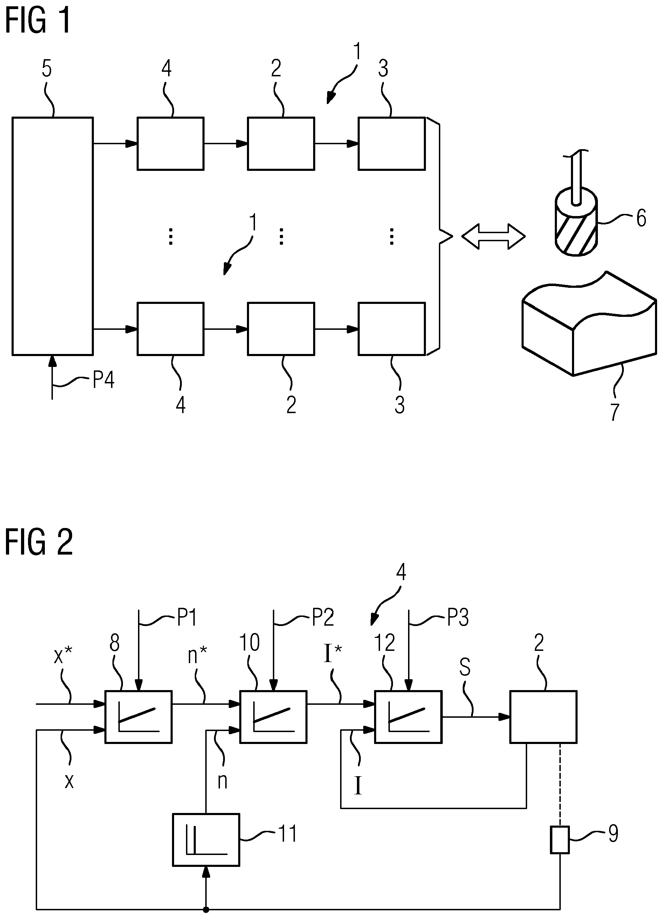

Gemäß FIG 1 weist eine Bearbeitungsmaschine mehrere lagegeregelte Achsen 1 auf. Die lagegeregelten Achsen 1 umfassen jeweils einen lagegeregelten Antrieb 2, eine vom jeweiligen lagegeregelten Antrieb 2 angetriebene Mechanik 3 und eine jeweilige Antriebssteuerung 4. Die lagegeregelten Achsen 1 werden von einer gemeinsamen Bewegungssteuerung 5 gesteuert, beispielsweise von einer numerischen Steuerung. Die Bewegungssteuerung 5 ist den Antriebssteuerungen 4 übergeordnet. Durch die koordinierte Ansteuerung der lagegeregelten Achsen 1 kann die Bewegungssteuerung 5 beispielsweise ein Bearbeitungswerkzeug 6 relativ zu einem zu bearbeitenden Werkstück 7 positionieren. Das Bearbeitungswerkzeug 6 ist in FIG 1 als Fräser dargestellt. Das Bearbeitungswerkzeug 6 könnte jedoch auch andersartig ausgebildet sein, beispielsweise als Drehwerkzeug oder als Laser.

Die Antriebssteuerungen 4 weisen entsprechend der Darstellung in FIG 2 jeweils einen Lageregler 8 auf. Dem jeweiligen Lageregler 8 werden ein jeweiliger Lagesollwert x* und ein jeweiliger Lageistwert x zugeführt. Der jeweilige Lagesollwert x* wird von der Bewegungssteuerung 5 ermittelt und vorgegeben. Der jeweilige Lageistwert x wird beispielsweise mittels eines jeweiligen Lagegebers 9 messtechnisch erfasst. Der jeweilige Lageregler 8 ermittelt anhand des jeweiligen Lagesollwertes x* und des jeweiligen Lageistwertes x unter Verwertung von jeweiligen Parametern P1 einen jeweiligen Drehzahlsollwert n* für einen jeweiligen unterlagerten Drehzahlregler 10. Dem jeweiligen Drehzahlregler 10 werden der jeweilige Drehzahlsollwert n* sowie ein jeweiliger Drehzahlistwert n zugeführt. Der jeweilige Drehzahlistwert n kann - analog zum jeweiligen Lageistwert x - mittels einer entsprechenden jeweiligen Messeinrichtung eigenständig messtechnisch erfasst werden. Alternativ kann der jeweilige Drehzahlistwert n beispielsweise mittels eines jeweiligen Differenzierers 11 anhand zeitlich aufeinanderfolgender jeweiliger Lageistwerte x ermittelt werden.

Entsprechend der Darstellung in FIG 2 ermittelt der jeweilige Drehzahlregler 10 anhand des Drehzahlsollwertes n* und des Drehzahlistwertes n unter Verwertung von jeweiligen Parametern P2 einen jeweiligen Stromsollwert I* für einen jeweiligen unterlagerten Stromregler 12. In diesem Fall werden dem jeweiligen Stromregler 12 der jeweilige Stromsollwert I* sowie ein jeweiliger Stromistwert I zugeführt. Der jeweilige Stromistwert I kann messtechnisch erfasst werden oder modellgestützt ermittelt werden. Der jeweilige Stromregler 12 ermittelt in diesem Fall anhand des jeweiligen Stromsollwertes I* und des jeweiligen Stromistwertes I unter Verwertung von jeweiligen Parametern P3 Ansteuersignale S für den jeweiligen Antrieb 2 und gibt die Ansteuersignale S an den jeweiligen Antrieb 2 aus. Alternativ könnte der jeweilige Drehzahlregler 10 anhand des jeweiligen Drehzahlsollwertes n* und des jeweiligen Drehzahlistwertes n unter Verwertung seiner jeweiligen Parameter P2 direkt die jeweiligen Ansteuersignale S für den jeweiligen Antrieb 2 ermitteln und an den jeweiligen Antrieb 2 ausgeben.

Die jeweiligen Parameter P1, P2, P3 der Regler 8, 10 und 12 können beispielsweise die jeweilige Proportionalverstärkung und die jeweilige Nachstellzeit sein. Weiterhin können die jeweiligen Parameter P1, P2, P3 beispielsweise festlegen, ob die Drehzahl n und der Strom I vorgesteuert werden oder nicht.

Auch die Bewegungssteuerung 5 wird oftmals parametriert. Die entsprechenden Parameter sind - siehe FIG 1 - als Parameter P4 bezeichnet. Die Parameter P4 werden von der Bewegungssteuerung 5 im Rahmen der Ermittlung der Folgen von Lagesollwerten x* für die Antriebssteuerungen 4 verwendet und verwertet. Insbesondere werden der Bewegungssteuerung 5 als Parameter P4 oftmals Grenzwerte vorgegeben, wie weit eine tatsächlich gefahrene Kontur von einer vorgegebenen Sollkontur abweichen darf und/oder innerhalb welcher Zeit eine Bearbeitung abgeschlossen sein soll.

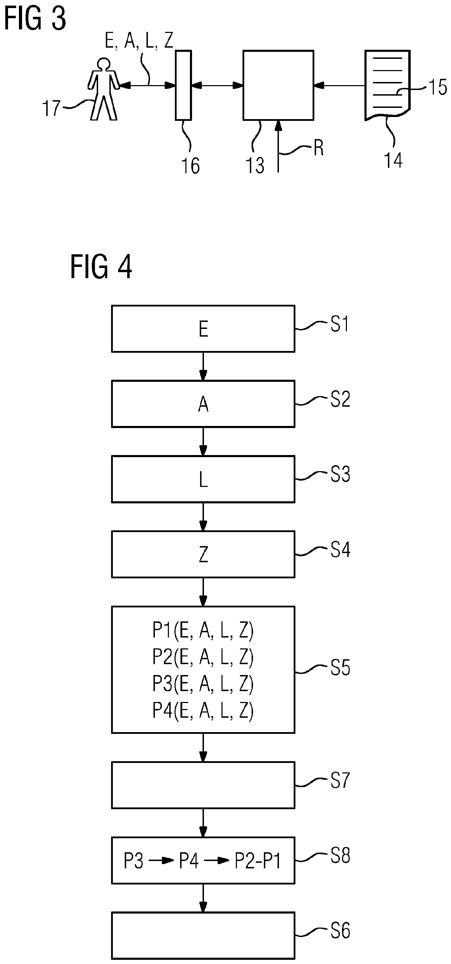

Zur Ermittlung einer Strategie zur Optimierung der Parameter P1 bis P4 und damit zur Optimierung des Betriebs der Achsen 1 und auch der Bearbeitungsmaschine insgesamt ist entsprechend der Darstellung in FIG 3 eine Recheneinrichtung 13 mit einem Computerprogramm 14 programmiert. Das Computerprogramm 14 umfasst Maschinencode 15, der von der Recheneinrichtung 13 abarbeitbar ist. Die Programmierung der Recheneinrichtung 13 mit dem Computerprogramm 14 bzw. - hierzu gleichwertig - die Abarbeitung des Maschinencodes 15 durch die Recheneinrichtung 13 - bewirkt, dass die Recheneinrichtung 13 im Betrieb ein Ermittlungsverfahren ausführt, das nachstehend in Verbindung mit FIG 4 näher erläutert wird.

Gemäß FIG 4 nimmt die Recheneinrichtung 13 in einem Schritt S1 über eine Benutzerschnittstelle 16 (siehe FIG 3) von einem Benutzer 17 Eigenschaften E des Werkstücks 7 entgegen, das mittels der Bearbeitungsmaschine bearbeitet werden soll. Die Eigenschaften E können beispielsweise Qualitätsmerkmale des Werkstücks 7 wie insbesondere dessen Oberflächenqualität oder dessen Maßhaltigkeit umfassen. Alternativ oder zusätzlich können die Eigenschaften E des Werkstücks 7 dessen Bearbeitungszeit umfassen. Auch können die Eigenschaften E die Masse, das Volumen, das Material und/oder die Abmessungen des Werkstücks 7 umfassen.

In einem Schritt S2 nimmt die Recheneinrichtung 13 über die Benutzerschnittstelle 16 von dem Benutzer 17 eine Beschreibung der Art A der vorzunehmenden Bearbeitung entgegen. Die Art A der Bearbeitung kann beispielsweise festlegen, ob ein Fräsen, ein Drehen oder eine Laserbearbeitung erfolgen soll. Im Falle eines Fräsens kann die Art A gegebenenfalls auch festlegen, wie viele und gegebenenfalls auch welche Freiheitsgrade bezüglich der Bewegung des Bearbeitungswerkzeugs 6 relativ zum Werkstück 7 bestehen.

In einem Schritt S3 nimmt die Recheneinrichtung 13 über die Benutzerschnittstelle 16 von dem Benutzer 17 eine Beschreibung L der Leistungsfähigkeit der Bearbeitungsmaschine entgegen. Die Beschreibung L kann beispielsweise für die einzelnen Achsen 1 jeweils eine maximal mögliche Drehzahl und eine maximal mögliche Beschleunigung spezifizieren, gegebenenfalls auch einen maximal möglichen Ruck.

In einem Schritt S4 nimmt die Recheneinrichtung 13 über die Benutzerschnittstelle 16 von dem Benutzer 17 ein Optimierungsziel Z entgegen. Das Optimierungsziel Z kann beispielsweise spezifizieren, in welchem Umfang im Rahmen der Optimierung die Konturgenauigkeit des Werkstücks 7 und die zum Erreichen der Konturgenauigkeit des Werkstücks 7 erforderliche Bearbeitungszeit berücksichtigt werden sollen.

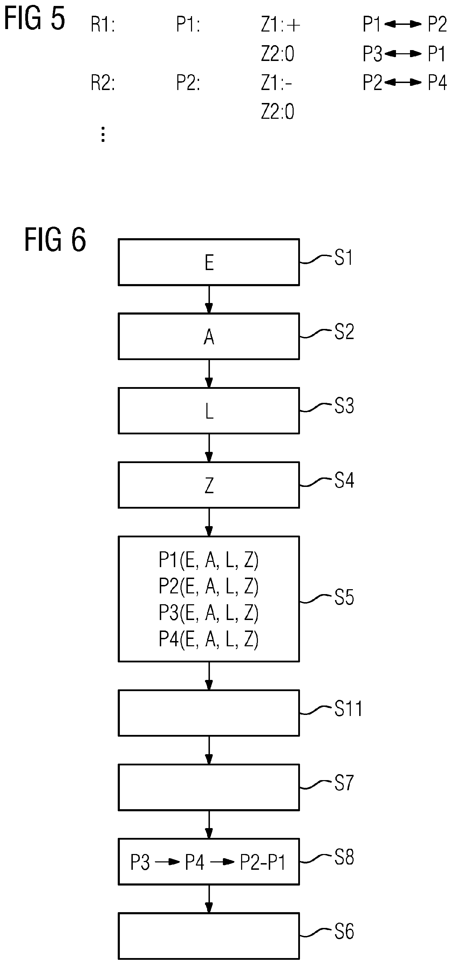

In einem Schritt S5 ermittelt die Recheneinrichtung 13 anhand der entgegengenommenen Daten E, A, L, Z unter Verwendung interner Ermittlungsregeln R, welche Parameter P1 bis P4 zur Optimierung des Betriebs der Bearbeitungsmaschine variiert werden sollen. Die Ermittlungsregeln R für die Parameter P1 bis P4 können beispielsweise entsprechend der Darstellung in FIG 5 eine Vielzahl von einzelnen Ermittlungsregeln R1, R2 usw. umfassen. Die Ermittlungsregeln R1, R2 können beispielsweise für einen jeweiligen Parameter P1 bis P4 eine Bewertung (in FIG 5 dargestellt als "+" für eine positive Bewertung, als "-" für eine negative Bewertung und als "0" für eine neutrale Bewertung) von deren jeweiligen Beiträgen zu möglichen Optimierungszielen Z1, Z2 usw. umfassen. In diesem Fall lässt sich für ein bestimmtes Optimierungsziel Z - also eines der möglichen Optimierungsziele Z1, Z2 usw. - durch eine kombinatorische Auswertung der Ermittlungsregeln R1, R2 usw. die bestmögliche Zusammenstellung an Parametern P1 bis P4 ermitteln.

Insbesondere des Umstands, dass manche Bewertungen auch negativ sein können, ist auch sofort offensichtlich, dass es nicht die beste Lösung sein kann, immer pauschal alle Parameter P1 bis P4 optimieren zu wollen.

Die Recheneinrichtung 13 ermittelt im Rahmen des Schrittes S5 weiterhin auch mit welchen Messgrößen M die Bearbeitungsmaschine oder einzelne Achsen 1 im Rahmen von Messungen betrieben werden sollen, um sinnvoll auswertbare Messergebnisse zu erhalten. Die Messgrößen können beispielsweise zur Prüfung der Stabilität eines Regelkreises eine Amplitude und eine Frequenz einer periodischen Störgröße umfassen, wobei für die Frequenz zusätzlich ein Frequenzbereich und eine Geschwindigkeit, mit der die Frequenz variiert wird, spezifiziert werden kann.

Schließlich ermittelt die Recheneinrichtung 13 im Rahmen des Schrittes S5 auch Kriterien K, anhand derer die Qualität einer bestimmten Parametrisierung - also konkreter Werte für die Parameter P1 bis P4 - beurteilt werden kann. Die Kriterien K geben dem Nutzer somit die Möglichkeit, die anhand der Messungen mit den Messgrößen M erhaltenen Messergebnisse bewerten zu können. Die Kriterien K können beispielsweise eine Grenzfrequenz und eine Grenzverstärkung umfassen. In diesem Fall muss beispielsweise eine Regelkreisverstärkung des geprüften geschlossenen Regelkreises unterhalb der Grenzverstärkung liegen, solange die Frequenz der periodischen Störung unterhalb der Grenzfrequenz bleibt.

Die Recheneinrichtung 13 übersetzt somit die durch die Eigenschaften E des Werkstücks und die Art A der Bearbeitung sowie die Leistungsfähigkeit L der Bearbeitungsmaschine und das Optimierungsziel Z definierten Anforderungen in eine Steuerungssicht. Dadurch entwickelt sie die entsprechenden Voreinstellungen für die Optimierung, welche für die Erreichung des Optimierungsziels Z relevant und erforderlich sind. Weiterhin ist der Recheneinrichtung 13 insbesondere auch bekannt, welche Parameter P1 bis P4 und vor allem welche Einstellungen der Parameter P1 bis P4 für bestimmte Optimierungsziele relevant sind.

In einem Schritt S6 gibt die Recheneinrichtung 13 die von ihr ermittelten Parameter P1 bis P4, Messgrößen M und Kriterien K an den Benutzer 17 aus.

In manchen Fällen gibt der Benutzer 17 einander entgegenstehende Optimierungsziele Z vor. Beispielsweise kann der Benutzer 17 gleichzeitig eine hochgenaue und schnelle Bearbeitung fordern. Insbesondere diese beiden Ziele widersprechen sich. Es ist zwar eine Einstellung der Parameter P1 bis P4 möglich, bei welcher das eine Ziel erreicht wird. Auch ist eine Einstellung der Parameter P1 bis P4 möglich, bei der das andere Ziel erreicht wird. Wenn aber beide Ziele erreicht werden sollen, muss ein Kompromiss gefunden werden. Auch hierauf kann die Recheneinrichtung 13 den Benutzer 17 im Rahmen der Ausgabe des Schrittes S6 hinweisen. Wenn eine hochgenaue Bearbeitung erfolgen soll, ist es insbesondere erforderlich, Achsen 1 weich zu beschleunigen, um Schwingungen zu vermeiden. Weiche Beschleunigungen führen aber zu relativ langsamen Geschwindigkeitsänderungen. Sie stehen damit einer Minimierung der Bearbeitungszeit entgegen. Wenn eine schnelle Bearbeitung vorrangig ist, müssen also auf Kosten der Bearbeitungsgenauigkeit die Parameter P1 bis P4 geändert werden, so dass die gefahrenen Konturen weicher werden und im Ergebnis mit einer höheren Bahngeschwindigkeit gefahren werden kann.

FIG 4 zeigt auch bereits einige Ausgestaltungen des Grundprinzips der vorliegenden Erfindung.

So kann beispielsweise zusätzlich ein Schritt S7 vorhanden sein. Im Schritt S7 ermittelt die Recheneinrichtung 13 Abhängigkeiten und Kopplungen der Achsen 1 und deren Parameter P1 bis P4 bezüglich der Auswirkungen auf mögliche Optimierungsziele Z1, Z2. In diesem Fall umfassen die Ermittlungsregeln R entsprechend der Darstellung in FIG 5 auch derartige Informationen.

Alternativ oder zusätzlich kann ein Schritt S8 vorhanden sein. Im Schritt S8 ermittelt die Recheneinrichtung 13 anhand weiterer Ermittlungsregeln R eine Reihenfolge, in welcher die zu variierenden Parameter P1 bis P4 variiert werden sollen. Die Recheneinrichtung 13 bringt die im Schritt S5 bestimmten Parameter P1 bis P4 also in eine bestimmte Reihenfolge. Die im Schritt S8 bestimmte Reihenfolge wird im Rahmen der Ausgabe des Schrittes S6 berücksichtigt bzw. mit ausgegeben.

FIG 6 zeigt eine mögliche Ausgestaltung von FIG 4. Gemäß FIG 6 ermittelt die Recheneinrichtung 13 in einem Schritt S11 zusätzlich zu den zu variierenden Parametern P1 bis P4 als solchen auch eine Kopplung der zu variierenden Parameter P1 bis P4 miteinander. Auch die Kopplung wird im Rahmen des Schrittes S6 an den Benutzer 17 ausgegeben.

Die Vorgehensweise der FIG 4 bis 6 kann auch simultan für mehrere Arten von Werkstücken 7 ausgeführt werden.

Um ein Werkstück 7 optimal bearbeiten zu können, um also eine bestmögliche Erfüllung aller Anforderungen wie beispielsweise Oberflächengüte und Bearbeitungszeit zu erreichen, müssen beispielsweise das Gewicht und/oder das Trägheitsmoment des Werkstücks 7 bekannt sein. Für diesen Zustand kann die Recheneinrichtung 13 unter Berücksichtigung der verschiedenen Anforderungen und Randbedingungen optimale Parameter P1 bis P4 ermitteln. Soll die Bearbeitungsmaschine jedoch Werkstücke 7 bearbeiten, die sich bezüglich ihrer Masse und/oder ihres Trägheitsmoments deutlich unterscheiden, so können hierfür verschiedene Parametrierungen erforderlich sein. Die Parameter P1 bis P4 müssen also individuell für das jeweilige Werkstück 7 eingestellt werden. In einem derartigen Fall können die zu bearbeitenden Werkstücke 7 in eine Anzahl von Gruppen unterteilt werden, wobei das Gewicht und/oder das Trägheitsmoment der Werkstücke innerhalb der jeweiligen Gruppe nur geringfügig variieren, von Gruppe zu Gruppe jedoch deutlich variieren. Die Anzahl an Gruppen kann nach Bedarf bestimmt sein, liegt aber in der Regel um mindestens den Faktor 10 unter der Anzahl an zu bearbeitenden Werkstücken 7. In einem derartigen Fall kann die Recheneinrichtung 13 für jede Gruppe ein mittleres Gewicht und/oder ein mittleres Trägheitsmoment der der jeweiligen Gruppe zugeordneten Werkstücke 7 ermitteln und im Rahmen der Ermittlung der Parameter P1 bis P4 für die jeweilige Gruppe das jeweilige mittlere Gewicht und/oder das jeweilige mittlere Trägheitsmoment ansetzen. Die Bewegungssteuerung 5 kann in diesem Fall in Abhängigkeit vom jeweiligen Werkstück 7 ermitteln, welcher Gruppe von Werkstücken 7 das jeweilige Werkstück 7 angehört, und in Abhängigkeit von dieser Ermittlung den geeigneten Satz von Parametern P1 bis P4 aktivieren.

Es ist natürlich auch möglich, einen einzigen Satz von Parametern P1 bis P4 zu ermitteln, der für alle zu bearbeitenden Werkstücke 7 gültig ist. In diesem Fall muss unter Umständen akzeptiert werden, dass einige Subziele des Optimierungsziels Z nicht oder nicht vollständig erreicht werden können.

Oftmals umfassen die Parameter P1 bis P4 Basisparameter und Zusatzparameter. Beispielsweise kann der Hersteller der Bewegungssteuerung 5 oder der Hersteller der Antriebssteuerungen 4 zwar gewisse Parameter P1 bis P4 (einschließlich der Möglichkeit, diese Parameter P1 bis P4 einzustellen und zu variieren) stets und unbedingt freischalten, andere Parameter aber nur bei Vorliegen bestimmter Voraussetzungen entweder überhaupt freischalten oder die Möglichkeit freischalten, diese Parameter einzustellen und zu variieren. Die bestimmten Voraussetzungen können beispielsweise in dem Entrichten einer zusätzlichen Lizenzgebühr liegen.

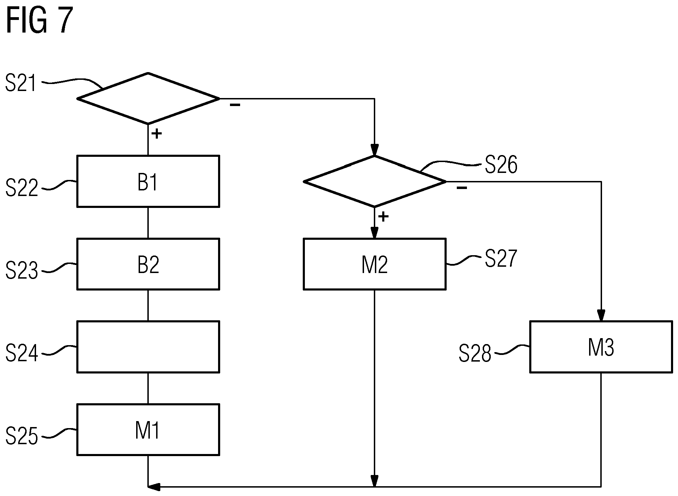

In einem derartigen Fall, wenn also die Parameter P1 bis P4 Basisparameter und Zusatzparameter umfassen, kann eine Ausgestaltung der Schritte S5 und S6 von FIG 4 realisiert werden, die nachstehend in Verbindung mit FIG 7 näher erläutert wird. Die Ausgestaltung gemäß FIG 7 kann nach Bedarf unabhängig von der Ausgestaltung gemäß FIG 6 oder in Kombination mit der Ausgestaltung von FIG 6 realisiert werden.

Gemäß FIG 7 kann die Recheneinrichtung 13 beispielsweise in einem Schritt S21 prüfen, ob das Optimierungsziel Z bereits durch ein Anpassen nur der Basisparameter erreicht werden kann. Wenn dies der Fall ist, ermittelt die Recheneinrichtung 13 in einem Schritt S22 vorzugsweise eine Bewertung B1. Die Bewertung B1 gibt an, wie gut das Optimierungsziel Z durch ein Anpassen nur der Basisparameter erreicht wird. Weiterhin ermittelt die Recheneinrichtung 13 in diesem Fall in einem Schritt S23 eine Bewertung B2. Die Bewertung B2 gibt an, wie gut das Optimierungsziel Z durch ein Anpassen der Basisparameter und zusätzlich der Zusatzparameter erreicht wird. Anhand der Bewertungen B1, B2 ermittelt die Recheneinrichtung 13 in einem Schritt S24 eine Empfehlung, ob zusätzlich zu den Basisparametern auch mindestens einer der Zusatzparameter variiert werden soll, ob also beispielsweise die zusätzliche Lizenzgebühr entrichtet werden soll. Die Recheneinrichtung 13 gibt die Empfehlung in einem Schritt S25 in Form einer Meldung M1 an den Benutzer 17 aus.

Wenn die Recheneinrichtung 13 im Schritt S21 hingegen zu dem Ergebnis kommt, dass das Optimierungsziel Z durch ein Anpassen nur der Basisparameter nicht erreicht werden kann, prüft die Recheneinrichtung 13 in einem Schritt S26, ob das Optimierungsziel Z durch ein Anpassen der Basisparameter und zusätzlich der Zusatzparameter erreicht werden kann. Wenn dies der Fall ist, gibt die Recheneinrichtung 13 in einem Schritt S27 eine entsprechende Meldung M2 an den Benutzer 17 aus. Wenn das Optimierungsziel Z hingegen auch durch ein Anpassen der Basisparameter und zusätzlich der Zusatzparameter nicht erreicht werden kann, gibt die Recheneinrichtung 13 in einem Schritt S28 eine entsprechende Meldung M3 an den Benutzer 17 aus.

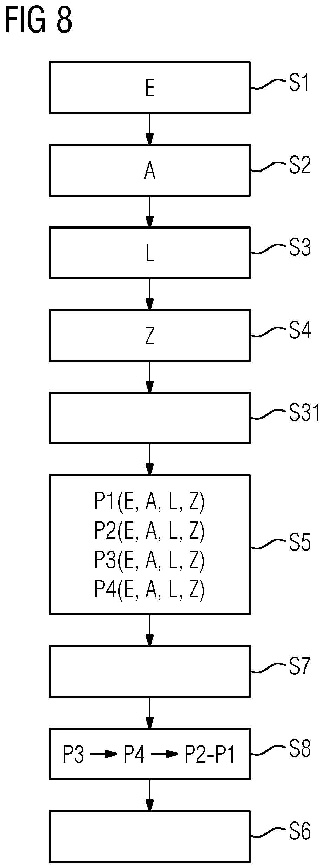

FIG 8 zeigt eine weitere mögliche Ausgestaltung von FIG 4. Die Ausgestaltung gemäß FIG 8 kann nach Bedarf unabhängig von den Ausgestaltungen gemäß FIG 6 und FIG 7 oder in Kombination mit einer oder beiden der Ausgestaltungen von FIG 6 und 7 realisiert werden.

Gemäß FIG 8 nimmt die Recheneinrichtung 13 in einem Schritt S31 vom Benutzer 17 zusätzlich entgegen, ob mittels der Bearbeitungsmaschine ein einzelnes Werkstück 7 oder eine Serie von Werkstücken 7 bearbeitet werden soll. In diesem Fall berücksichtigt die Recheneinrichtung 13 diese Information im Rahmen des Schrittes S5 bei der Ermittlung der zu variierenden Parameter P1 bis P4.

Im Rahmen der vorliegenden Erfindung wird also aus den in den Schritten S1 bis S4 vorgegebenen Größen E, A, L, Z automatisch eine Optimierungsstrategie ermittelt. Beispielsweise erfordern Werkstücke 7, die aus Konturen mit verschiedenen Radien bestehen, dass die Achsen 1 unterschiedliche Geschwindigkeiten fahren, dass die Verfahrbewegung des Bearbeitungswerkzeugs 6 auf dem Werkstück 7 die Richtung umkehrt und dass die Bewegungssteuerung 5 mit unterschiedlichem Aufmaß umgehen kann.

Daraus resultiert eine Optimierungsstrategie, die folgende Elemente enthält und gezielt Modi vorschlägt wie beispielsweise eine Momentenvorsteuerung oder keine Momentenvorsteuerung, eine statische, eine dynamische oder keine Reibkompensation und - aufgrund einer entsprechenden Reglerauslegung eine hinreichend große Störunterdrückung. Auch andere Werkstücke 7, die durch eine Schleifbearbeitung gefertigt werden, haben hingegen andere Anforderungen. Insbesondere ist in diesen Fällen gefordert, dass die Achsen 1 eine konstante Geschwindigkeit hochgenau einhalten können, dass eine das Werkstück 7 bewegende Achse 1 eine geforderte Geschwindigkeit zu einem bestimmten Zeitpunkt erreicht hat und dass eine Anregung von Schwingungen vermieden wird.

Daraus folgt eine Optimierungsstrategie, bei der eine hinreichend große Störunterdrückung nur für die das Werkstück 7 bewegende Achse 1 erforderlich ist, Ruck und Beschleunigung der Achsen 1 aber passend ausgelegt werden, so dass zwar einerseits der Ruck möglichst niedrig ist, andererseits aber dennoch eine geforderte Beschleunigung in hinreichend kurzer Zeit erreicht wird. Weiterhin dürfen Achsen 1 ihre Bewegungsrichtung nicht ruckartig umkehren. Aus diesem Grund sollte beispielsweise keine Reibkompensation verwendet werden.

Zusammengefasst betrifft die vorliegende Erfindung somit folgenden Sachverhalt:

Eine Bewegungssteuerung 5 einer Bearbeitungsmaschine ermittelt unter Verwendung von Parametern P4 Folgen von Lagesollwerten x* und gibt je eine der Folgen von Lagesollwerten x* einer jeweiligen Antriebssteuerung 4 vor, welche unter Verwendung von Parametern P1 bis P3 Ansteuersignale S für eine von einem jeweiligen Antrieb 2 angetriebene Mechanik 3 einer jeweiligen lagegeregelten Achse 1 ermitteln und an den jeweiligen Antrieb 2 ausgeben. Zur Optimierung des Betriebs der Bearbeitungsmaschine nimmt eine Recheneinrichtung 13 über eine Benutzerschnittstelle 16 von einem Benutzer 17 Eigenschaften E eines mittels der Bearbeitungsmaschine zu bearbeitenden Werkstücks 7, eine Beschreibung der Art A der vorzunehmenden Bearbeitung, eine Beschreibung L der Leistungsfähigkeit der Bearbeitungsmaschine und ein Optimierungsziel Z entgegen. Die Recheneinrichtung 13 ermittelt anhand der entgegengenommenen Daten E, A, L, Z unter Verwendung interner Ermittlungsregeln R, welche Parameter P1 bis P4 zur Optimierung des Betriebs variiert werden sollen, mit welchen Messgrößen M die Bearbeitungsmaschine oder einzelne Achsen 1 im Rahmen von Messungen betrieben werden sollen, um sinnvoll auswertbare Messergebnisse zu erhalten, und welche Kriterien K zur Bewertung der anhand der Messungen ermittelten Messergebnisse verwendet werden können. Das das Ergebnis ihrer Ermittlung gibt die Recheneinrichtung 13an den Benutzer 17 aus.

Die vorliegende Erfindung weist viele Vorteile auf. Insbesondere ist es nicht erforderlich, dass der Benutzer 17 die regeltechnischen Größen wie beispielsweise die Phasenreserve und die Amplitudenreserve (in Grad und Dezibel) oder weitere Stabilitätskriterien kennen und verstehen muss. Stattdessen kann der Benutzer 17 für ihn relevante Größen wie beispielsweise eine Positioniergenauigkeit in Mikrometer vorgeben. Sofern verschiedene Betriebsmodi bestehen, kann mittels der erfindungsgemäßen Vorgehensweise auch der dem Optimierungsziel Z entsprechende Betriebsmodus (beispielsweise störoptimale Reglereinstellung einerseits oder dämpfungsoptimale Reglereinstellung andererseits) bestimmt und dem Benutzer 17 vorgegeben werden. Weiterhin wird durch die erfindungsgemäße Vorgehensweise ermöglicht, dass auch ein Benutzer 17, der kein Regelungsexperte ist, die Optimierung vornehmen kann. Die Optimierung selbst muss zwar weiterhin vom Benutzer 17 durchgeführt werden. Dem Benutzer 17 wird jedoch vorgegeben, welche Parameter P1 bis P4 er einstellen muss und worauf er bei der Einstellung der Parameter P1 bis P4 achten muss. Weiterhin ist es auf einfachem Weise möglich eine einmal ermittelte Vorgehensweise auf andere Bearbeitungsmaschinen zu übertragen. Der Benutzer 17 muss nur die Eigenschaften der Bearbeitungsmaschine und die geforderte Werkstückqualität kennen. Derartige anwendungsbezogene Parameter sind dem Benutzer 17 in der Regel auch dann geläufig, wenn er kein Steuerungsexperte ist. Die erfindungsgemäße Vorgehensweise steht somit im Gegensatz zu den Vorgehensweisen des Standes der Technik, bei denen der Benutzer 17 die einzelnen Parameter P1 bis P4 kennen musste. Weiterhin ist durch die erfindungsgemäße Vorgehensweise gewährleistet, dass nur die zielführenden Funktionen der Antriebssteuerungen 4 und der Bewegungssteuerung 5 aktiviert werden. Dem Benutzer 17 werden diejenigen Parameter P1 bis P4 genannt, welche er - gegebenenfalls in welcher Reihenfolge - einstellen und optimieren muss .

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ermittlungsverfahren für eine Strategie zur Optimierung des Betriebs einer Bearbeitungsmaschine, wobei eine Bewegungssteuerung (5) der Bearbeitungsmaschine unter Verwendung von Parametern (P4) Folgen von Lagesollwerten (x*) ermittelt und je eine der Folgen von Lagesollwerten (x*) einer jeweiligen Antriebssteuerung (4) vorgibt, wobei die Antriebssteuerungen (4) unter Verwendung von Parametern (P1 bis P3) Ansteuersignale (S) für eine von einem jeweiligen Antrieb (2) angetriebene Mechanik (3) einer jeweiligen lagegeregelten Achse (1) ermitteln und die Ansteuersignale (S) an den jeweiligen Antrieb (2) ausgeben,
- wobei eine Recheneinrichtung (13) über eine Benutzerschnittstelle (16) von einem Benutzer (17) Eigenschaften (E) eines mittels der Bearbeitungsmaschine zu bearbeitenden Werkstücks (7), eine Beschreibung der Art (A) der vorzunehmenden Bearbeitung, eine Beschreibung (L) der Leistungsfähigkeit der Bearbeitungsmaschine und ein Optimierungsziel (Z) entgegennimmt,
- wobei die Recheneinrichtung (13) anhand der entgegengenommenen Daten (E, A, L, Z) unter Verwendung interner Ermittlungsregeln (R) ermittelt,
-- welche Parameter (P1 bis P4) zur Optimierung des Betriebs variiert werden sollen,
-- mit welchen Messgrößen (M) die Bearbeitungsmaschine oder einzelne Achsen (1) im Rahmen von Messungen betrieben werden sollen, um sinnvoll auswertbare Messergebnisse zu erhalten, und
-- welche Kriterien (K) zur Bewertung der anhand der Messungen ermittelten Messergebnisse verwendet werden können,
und die ermittelten Parameter (P1 bis P4), Messgrößen (M) und Kriterien (K) an den Benutzer (17) ausgibt.

2. Ermittlungsverfahren nach Anspruch 1,
**dadurch gekennzeichnet,**
**dass** die Eigenschaften (E) des Werkstücks (7) dessen Bearbeitungszeit und/oder Qualitätsmerkmale des Werkstücks (7) umfassen, insbesondere dessen Oberflächengüte oder Maßhaltigkeit.

3. Ermittlungsverfahren nach Anspruch 1 oder 2,
**dadurch gekennzeichnet,**
**dass** die Eigenschaften (E) des Werkstücks (7) dessen Masse, dessen Volumen, dessen Material und/oder dessen Abmessungen umfassen.

4. Ermittlungsverfahren nach Anspruch 1, 2 oder 3,
**dadurch gekennzeichnet,**
**dass** das Optimierungsziel (Z) spezifiziert, in welchem Umfang im Rahmen der Optimierung die Konturgenauigkeit des Werkstücks (7) und die zum Erreichen der Konturgenauigkeit des Werkstücks (7) erforderliche Bearbeitungszeit berücksichtigt werden sollen.

5. Ermittlungsverfahren nach einem der obigen Ansprüche,
**dadurch gekennzeichnet,**
**dass** die Ermittlungsregeln (R) für die Parameter (P1 bis P4) eine Bewertung von deren jeweiligen Beiträgen zu möglichen Optimierungszielen (Z1, Z2) umfassen.

6. Ermittlungsverfahren nach einem der obigen Ansprüche,
**dadurch gekennzeichnet,**
**dass** die Ermittlungsregeln (R) Abhängigkeiten und Kopplungen der Achsen (1) und deren Parameter (P1 bis P4) und deren Auswirkungen auf mögliche Optimierungsziele (Z1, Z2) umfassen.

7. Ermittlungsverfahren nach einem der obigen Ansprüche,
**dadurch gekennzeichnet,**
**dass** die Recheneinrichtung (13) zusätzlich zu den zu variierenden Parametern (P1 bis P4) als solchen auch eine Kopplung der zu variierenden Parameter (P1 bis P4) ermittelt und an den Benutzer (17) ausgibt und/oder eine Reihenfolge, in welcher die zu variierenden Parameter (P1 bis P4) variiert werden sollen, ermittelt und an den Benutzer (17) ausgibt.

8. Ermittlungsverfahren nach einem der obigen Ansprüche,
**dadurch gekennzeichnet,**
**dass** die Parameter (P1 bis P4) Basisparameter und Zusatzparameter umfassen und dass die Recheneinrichtung (13) prüft, ob zusätzlich zu den Basisparametern auch mindestens einer der Zusatzparameter variiert werden soll oder muss, und dass die Recheneinrichtung (13) das Ergebnis der Prüfung an den Benutzer (17) ausgibt.

9. Ermittlungsverfahren nach einem der obigen Ansprüche,
**dadurch gekennzeichnet,**
**dass** die Recheneinrichtung (13) vom Benutzer (17) zusätzlich entgegennimmt, ob mittels der Bearbeitungsmaschine ein einzelnes Werkstück (7) oder eine Serie von Werkstücken (7) bearbeitet werden soll, und diese Information bei der Ermittlung der zu variierenden Parameter (P1 bis P4) berücksichtigt.

10. Computerprogramm, das Maschinencode (15) umfasst, der von einer Recheneinrichtung (13) abarbeitbar ist, wobei die Abarbeitung des Maschinencodes (15) durch die Recheneinrichtung (13) bewirkt, dass die Recheneinrichtung (13) ein Ermittlungsverfahren nach einem der obigen Ansprüche ausführt.

11. Recheneinrichtung, die mit einem Computerprogramm (14) nach Anspruch 10 programmiert ist, so dass die Recheneinrichtung im Betrieb ein Ermittlungsverfahren nach einem der Ansprüche 1 bis 9 ausführt.
